# EUROPÄISCHE PATENTSCHRIFT

(11) **EP 3 086 064 B1**
(45) Veröffentlichungstag und Bekanntmachung des Hinweises auf die Patenterteilung: **16.05.2018**
(21) Anmeldenummer: 16161968.9
(22) Anmeldetag: 23.03.2016
(51) Int. Cl.: F25D 23/02

(54) **HAUSHALTSKÄLTEGERÄT MIT EINER ELEKTRO-MECHANISCHEN ÖFFNUNGS-HILFSVORRICHTUNG**
HOUSEHOLD REFRIGERATOR WITH AN ELECTRO-MECHANICAL OPENING AID
APPAREIL FRIGORIFIQUE MÉNAGER COMPRENANT UN DISPOSITIF AUXILIAIRE D'OUVERTURE ÉLÉCTROMÉCANIQUE

(30) Priorität: 22.04.2015 DE 102015207314
(43) Veröffentlichungstag der Anmeldung: 26.10.2016
(73) Patentinhaber: BSH Hausgeräte GmbH, 81739 München (DE)
(72) Erfinder: Heydel, Adolf, 71111 Waldenbuch (DE); Schmidt, Nikolaus, 71067 Sindelfingen (DE); Dieckmann, Klaus, 73329 Kuchen (DE)

(56) Entgegenhaltungen:
- JP-A- H02 146 487
- JP-A- 2001 280 827
- JP-A- 2003 240 424
- JP-U- H0 377 189

## Beschreibung

Die Erfindung betrifft ein Haushaltskältegerät, aufweisend einen wärmeisolierten Korpus, der einen Innenbehälter mit einem zum Lagern von Lebensmitteln vorgesehenen kühlbaren Innenraum aufweist, eine zum Kühlen des kühlbaren Innenraums vorgesehene Kältevorrichtung und eine elektro-mechanische Öffnungs-Hilfsvorrichtung, sowie ein relativ zum wärmeisolierten Korpus schwenkbar gelagertes, zum Öffnen und Schließen des kühlbaren Innenraums vorgesehenes Türblatt oder eine Schublade, welche im geschlossenen Zustand in den kühlbaren Innenraum geschoben ist, um diesen zu schließen, und im geöffneten Zustand zumindest teilweise aus dem kühlbaren Innenraum herausgezogen ist, wobei die elektro-mechanische Öffnungs-Hilfsvorrichtung einen elektro-mechanischen Aktuator aufweist, der ausgebildet ist, bei seiner Aktivierung das geschlossene Türblatt bzw. die geschlossene Schublade durch Verstellen eines Stellkörpers der elektro-mechanischen Öffnungs-Hilfsvorrichtung zumindest teilweise automatisch zu öffnen.

Die DE 10 2006 061 083 A1 offenbart ein Haushaltskältegerät, das einen wärmeisolierten Korpus mit einem Innenbehälter aufweist. Der Innenbehälter begrenzt einen kühlbaren Innenraum. Das Haushaltskältegerät umfasst ein relativ zum Korpus schwenkbar gelagertes, zum Öffnen und Schließen des Innenraums vorgesehenes Türblatt und eine Türöffnungshilfe, die einen Stellkörper und einen Luftdrucksensor aufweist, der eingerichtet ist, eine aufgrund eines Drückens und/oder Ziehens an dem geschlossenen Türblatt resultierende Luftdruckänderung innerhalb des kühlbaren Innenraums zu ermitteln, um daraufhin automatisch mittels des Stellkörpers das geschlossene Türblatt zumindest teilweise zu öffnen.

Aus der JP H03 77189 U, der JP H02 146487 A, der JP 2001 280827 A und der JP 2003 240424 A ist jeweils eine insbesondere elektro-mechanische Öffnungs-Hilfsvorrichtung bekannt, die jeweils einen elektrischen Motor, ein Getriebe und eine Zahnstange umfasst, die einen Stößel antreibt, der ausgebildet ist, ein Türblatt oder eine Schublade eines Kältegeräts angetrieben aufzustoßen.

Aufgabe der Erfindung ist es, ein Haushaltskältegerät mit einer elektro-mechanischen Öffnungs-Hilfsvorrichtung zum unterstützenden Öffnen eines geschlossenen Türblatts oder einer geschlossenen Schublade anzugeben, die besonders geräuscharm zu betreiben ist.

Die Aufgabe der Erfindung wird gelöst durch ein Haushaltskältegerät, aufweisend einen wärmeisolierten Korpus, der einen Innenbehälter mit einem zum Lagern von Lebensmitteln vorgesehenen kühlbaren Innenraum aufweist, eine zum Kühlen des kühlbaren Innenraums vorgesehene Kältevorrichtung und eine elektro-mechanische Öffnungs-Hilfsvorrichtung, sowie ein relativ zum wärmeisolierten Korpus schwenkbar gelagertes, zum Öffnen und Schließen des kühlbaren Innenraums vorgesehenes Türblatt oder eine Schublade, welche im geschlossenen Zustand in den kühlbaren Innenraum geschoben ist, um diesen zu schließen, und im geöffneten Zustand zumindest teilweise aus dem kühlbaren Innenraum herausgezogen ist, wobei die elektro-mechanische Öffnungs-Hilfsvorrichtung einen elektro-mechanischen Aktuator aufweist, der ausgebildet ist, bei seiner Aktivierung das geschlossene Türblatt bzw. die geschlossene Schublade durch Verstellen eines Stellkörpers der elektro-mechanischen Öffnungs-Hilfsvorrichtung zumindest teilweise automatisch zu öffnen, und wobei der elektro-mechanische Aktuator einen elektrischen Motor, ein Antriebsritzel, ein Doppelverzahnungs-Stirnrad und eine Zahnstange aufweist, wobei das Antriebsritzel mit einer Motorwelle des Motors verbunden ist und mit der Eingangsverzahnung des Doppelverzahnungs-Stirnrades kämmt, die Ausgangsverzahnung des Doppelverzahnungs-Stirnrades mit einem Zahnstangenprofil der Zahnstange in Eingriff ist und die Zahnstange mit dem Stellkörper verbunden ist, und die Zahnstange an einer dem Zahnstangenprofil gegenüberliegenden Zahnstangenwand eine erste Wälzfläche aufweist, an der wenigstens ein Wälzkörper abwälzt, der sich außerdem an seiner der ersten Wälzfläche gegenüberliegenden Seite gegen das Gehäuse abstützt.

Im Falle eines Türblatts ist dieses vorzugsweise bezüglich einer Achse, die vorzugsweise vertikal verläuft, schwenkbar gelagert. Das erfindungsgemäße Haushaltskältegerät kann zusätzlich oder alternativ zum Türblatt eine Schublade aufweisen, welche im geschlossenen Zustand in den kühlbaren Innenraum geschoben ist, um diesen zu schließen, und im geöffneten Zustand zumindest teilweise aus dem kühlbaren Innenraum herausgezogen ist. In einem solchen Falle ist die elektro-mechanische Öffnungs-Hilfsvorrichtung eingerichtet, eine aufgrund eines Drückens und/oder Ziehens an der geschlossenen Schublade ausgelösten Aktivierung der elektro-mechanischen Öffnungs-Hilfsvorrichtung, die geschlossene Schublade mittels der elektro-mechanischen Öffnungs-Hilfsvorrichtung zumindest teilweise zu öffnen bzw. ein Öffnen zu unterstützen.

Die Kältevorrichtung ist vorzugsweise ein Kältemittelkreislauf. Der Kältemittelkreislauf umfasst einen Verdichter und insbesondere einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist.

An der Richtung kühlbarem Innenraum gerichteten Seite des Türblatts bzw. der Schublade ist vorzugsweise eine elastische Magnetdichtung angebracht, welche bei geschlossenem Türblatt bzw. bei geschlossener Schublade am wärmeisolierten Korpus dichtend anliegt. Die Magnetdichtung ist elastisch, sodass sich bei einem Drücken am geschlossenen Türblatt bzw. an der geschlossenen Schublade dieses bzw. diese ein wenig in Richtung des kühlbaren Innenraums bewegt, wodurch sich der Luftdruck innerhalb des kühlbaren Innenraums ändert. Aufgrund der elastischen Magnetdichtung löst sich bei einem Ziehen am geschlossenen Türblatt bzw. an der geschlossenen Schublade die Magnetdichtung nicht sofort vom wärmeisolierten Korpus, wodurch sich der Luftdruck innerhalb des kühlbaren Innenraums ändert.

Eine solche Änderung des Luftdrucks kann beispielsweise mittels eines Luftdrucksensors automatisch erkannt werden, wodurch auf einen Wunsch einer Person, das geschlossene Türblatt bzw. die geschlossene Schublade öffnen zu wollen, geschlossen werden kann. So kann beispielsweise eine mit dem Luftdrucksensor verbundene Steuervorrichtung die elektro-mechanische Öffnungs-Hilfsvorrichtung automatisch aktivieren. Die erfindungsgemäße elektro-mechanische Öffnungs-Hilfsvorrichtung kann aber auch auf andere Weise aktiviert werden, beispielsweise durch einen manuell zu betätigenden elektrischen Taster oder durch andere Arten von Sensoren, die eine Absicht einer Person, das geschlossene Türblatt bzw. die geschlossene Schublade öffnen zu wollen, erkennen bzw. zumindest prädiktiv feststellen können.

Die elektro-mechanische Öffnungs-Hilfsvorrichtung betätigt einen Stellkörper, vorzugsweise einen Stößel, welcher automatisch z.B. mittels eines Aktuators beispielsweise von einer eingefahrenen in eine ausgefahrene Stellung bewegt werden kann, um das geschlossene Türblatt bzw. die geschlossene Schublade zumindest teilweise zu öffnen, vorzugsweise zumindest soweit zu öffnen, dass sich die Magnetdichtung vom wärmeisolierten Korpus löst.

Indem der elektro-mechanische Aktuator einen elektrischen Motor, ein Antriebsritzel, ein Doppelverzahnungs-Stirnrad und eine Zahnstange aufweist, wobei das Antriebsritzel mit einer Motorwelle des Motors verbunden ist und mit der Eingangsverzahnung des Doppelverzahnungs-Stirnrades kämmt, die Ausgangsverzahnung des Doppelverzahnungs-Stirnrades mit einem Zahnstangenprofil der Zahnstange in Eingriff ist und die Zahnstange mit dem Stellkörper verbunden ist, wird ein besonders geräuscharmer elektro-mechanischer Aktuator geschaffen, der den Stellkörper der Öffnungs-Hilfsvorrichtung bewegt.

Die Zahnstange überträgt die Linearbewegung auf den Stellkörper. Die Zahnstange kann an einem Grundkörper ausgebildet sein. Der Grundkörper kann eine Aufnahme aufweisen, in welche der Stellkörper, insbesondere der Stößel eingesteckt und darin verrastet ist. Der Stellkörper, insbesondere der Stößel kann an seinem freien Stirnende eine Kappe aufweisen. Die Kappe kann beispielsweise auf das Stirnende des Stellkörpers, insbesondere des Stößels aufgesteckt oder aufgeschraubt sein. Insbesondere im Falle eines Stellkörpers oder Stößels aus einem metallischen Werkstoff, wie Stahl, kann die Kappe aus Kunststoff hergestellt sein. Die Kappe berührt zumindest während des automatischen Öffnungsvorgangs das zu öffnende Türblatt oder die zu öffnende Schubladenfront an dessen jeweiliger Innenseite. Der Grundkörper kann darüber hinaus außerdem eine erste Wange aufweisen, welche die Ausgangsverzahnung des Doppelverzahnungs-Stirnrades axial abzustützen vermag.

Der Motor kann ein elektrischer Außenläufermotor sein, dessen Außenläufertopf einen Hohlwellenabschnitt aufweist, welcher das Antriebsritzel trägt. Der Außenläufertopf kann einteilig mit dem Hohlwellenabschnitt und/oder einteilig mit dem Antriebsritzel ausgebildet sein.

Die Eingangsverzahnung des Doppelverzahnungs-Stirnrades kann mit dem Antriebsritzel eine Übersetzung von 6 zu 1 aufweisen. Das Doppelverzahnungs-Stirnrad weist zwei Stirnräder auf, die insbesondere einteilig miteinander verbunden sein können, wobei das eine Stirnrad großen Durchmessers die Eingangsverzahnung bildet und das andere Stirnrad kleinen Durchmessers die Ausgangsverzahnung bildet, welche in die Zahnstange eingreift.

Das Antriebsritzel kann in einem solchen Abstand zum Doppelverzahnungs-Stirnrad angeordnet sein, dass der Kopfkreisdurchmesser des Antriebsritzels den Teilkreisdurchmesser der Eingangsverzahnung des Doppelverzahnungs-Stirnrades berührt. Alternativ oder ergänzend kann das Antriebsritzel in einem solchen Abstand zum Doppelverzahnungs-Stirnrad angeordnet sein, dass der Teilkreisdurchmesser des Antriebsritzels den Kopfkreisdurchmesser der Eingangsverzahnung des Doppelverzahnungs-Stirnrades berührt. Dadurch und durch die einzige Getriebestufe wird neben der Geräuschreduzierung auch ein hoher Wirkungsgrad bei gleichzeitig hoher Tragfähigkeit erreicht.

Die Zahnstange weist erfindungsgemäß an einer dem Zahnstangenprofil gegenüberliegenden Zahnstangenwand eine erste Wälzfläche auf, an der wenigstens ein Wälzkörper, insbesondere wenigstens eine glattwandige oder gezahnte Stützrolle, abwälzt, welcher Wälzkörper sich außerdem an seiner der ersten Wälzfläche gegenüberliegenden Seite gegen das Gehäuse abstützt.

So kann die dem Zahnstangenprofil gegenüberliegende Zahnstangenwand der Zahnstange ein zweites Zahnstangenprofil aufweisen, in welches ein Stützzahnrad als Wälzkörper eingreift bzw. mit diesem kämmt. Insoweit kann ein solches Stützzahnrad die gezahnte Stützrolle bilden. Das Gehäuse kann demgemäß an der der Wälzfläche, d.h. dem zweiten Zahnstangenprofil gegenüberliegenden Seite ein drittes Zahnstangenprofil aufweisen, über das sich das Stützzahnrad gegen das Gehäuse abstützt. In einer speziellen Ausführungsform weist der elektro-mechanische Aktuator zwei Stützzahnräder auf, die zueinander parallel ausgerichtete, in einem Abstand voneinander angeordnete Drehachsen aufweisen. Dabei kämmen die beiden Stützzahnräder beide mit demselben zweiten Zahnstangenprofil und demselben dritten Zahnstangenprofil. Das wenigstens eine Stützzahnrad, insbesondere die zwei Stützzahnräder können mit ein Wellenprofil aufweisen. Demgemäß kann auch das zweite und dritte Zahnstangenprofil als ein Wellenprofil ausgebildet sein. Die Stützzahnräder können aus den Antriebskräften des Zahnrades und der Zahnstange resultierende radiale Kräfte aufnehmen und in das Gehäuse ableiten.

An einer dem Zahnstangenprofil gegenüberliegenden Zahnstangenwand der Zahnstange, bzw. des Grundkörpers kann der Grundkörper demgemäß eine Wälzfläche, insbesondere in Form eines Wellenprofils aufweisen. An einer solchen Wälzfläche wälzen beispielsweise zwei Wälzkörper in Form von gezahnten Stützrollen ab. Die gezahnten Stützrollen können jeweils ein Wellenprofil aufweisen. Die Wälzkörper, insbesondere die Stützrollen können an einer der Wälzfläche gegenüberliegenden Seite der Wälzkörper bzw. der Stützrollen durch eine feststehende zweite Wälzfläche gegen das Gehäuse abgestützt sein. Die zweite Wälzfläche kann entweder an einem separaten Stützkörper ausgebildet sein, der an dem Gehäuse befestigt ist, oder einteilig unmittelbar mit einer Innenwand des Gehäuses ausgebildet sein.

Die Stützrollen können mit einer Wellenverzahnung versehen sein und im Gegensatz zu einer Rollenlagerung hierdurch einen schlupfreien Lauf ermöglichen. Im Vergleich zu einer Rolle mit herkömmlicher Zahngeometrie ist mittels der Wellenverzahnung ein gleichmäßiges Abwälzen ohne Rasten möglich.

Das Doppelverzahnungs-Stirnrad kann demgemäß eine Wange bilden und/oder die Zahnstange kann eine Wange aufweisen, an welcher der wenigstens eine Wälzkörper axial geführt ist, insbesondere die beiden Stützzahnräder axial geführt sind.

Das Doppelverzahnungs-Stirnrad kann eine zweite Wange bilden, an welcher nicht nur die Ausgangsverzahnung bzw. das Zahnstangenprofil eine axiale Führung erhält, sondern gleichzeitig auch der wenigstens eine Wälzkörper bzw. die beiden Stützrollen axial geführt sind.

Generell kann die elektro-mechanische Öffnungs-Hilfsvorrichtung ein Gehäuse, insbesondere zwei Gehäusehälften aufweisen, und das Gehäuse, die Gehäusehälften, das Antriebsritzel, das Doppelverzahnungs-Stirnrad, die Zahnstange, der wenigstens eine Wälzkörper und/oder der Stellkörper können aus glasfaserverstärktem Polyamid (PA-GF) hergestellt sein.

Zur Erzielung einer kompakten und geräuscharmen Baueinheit können die beiden Gehäusehälften, insbesondere ein Gehäuseboden und ein Gehäusedeckel in die Getriebe- und Motorlagerung einbezogen werden. Der Statorhalter ist dann Teil des Gehäusebodens. Hier findet in dieser Ausführungsform die Zentrierung der starren Motorachse und des Stators relativ zum Rotor statt. Der Motor ist dabei als Außenläufer aufgebaut. Die Abstützung der Lagerkräfte und/oder Abtriebskräfte erfolgt überwiegend über die Gehäuseschalen. Aufbau/Montage des Motors ist besonders einfach, da zunächst der Stator in den Statorhalter am Boden des Gehäuses eingesteckt, eingerastet oder festgeschraubt wird. Die Konstruktion ist ausreichend gegen Verdrehen und Abziehen gesichert. Die Montage des Achsstifts und des Motors erfolgt durch einfaches Einsetzen. Die Rotorglocke zentriert sich durch den permanent erregten magnetischen Kreis selbst. Geringes Lagerspiel sorgt für einen präzisen Lauf des Rotors. Gehärtete und beschichtete Lagerstifte sorgen für einen reibungsarmen Lauf. Eine Schmierung des Gleitlagers ist deshalb nicht zwingend erforderlich.

Demgemäß kann die elektro-mechanische Öffnungs-Hilfsvorrichtung ganz allgemein ein Gehäuse, insbesondere zwei Gehäusehälften aufweisen, worin zumindest der elektrischen Motor, das Antriebsritzel, das Doppelverzahnungs-Stirnrad, die Zahnstange, der wenigstens eine Wälzkörper und der Stellkörper angeordnet bzw. gelagert oder befestigt sind.

Der elektrische Motor kann in allen Ausführungsvarianten ein permanenterregter Wechselstrom-Synchronmotor sein, der insbesondere mit einer Drehzahl zwischen 500 und 1.000 Umdrehungen pro Minute, insbesondere mit einer Drehzahl zwischen 700 und 800 Umdrehungen pro Minute betrieben wird.

Für den Antrieb kann ein sogenannter BLDC-Motor mit einer extrem flachen Bauweise und einem Drehmoment von ca. 0,27 Nm bei ca. 780 U/min verwendet werden, um hohe Drehmomente bei möglichst geringer Drehzahlen bereitstellen zu können. Sinusförmige Phasenspannungen/-ströme sorgen für einen weitgehend oberwellenarmen Drehmomentverlauf des Antriebs.

Die elektro-mechanische Öffnungs-Hilfsvorrichtung kann in allen entsprechenden Ausführungen eine erste Gehäusehälfte und eine zweite Gehäusehälfte aufweisen, wenigstens eine der beiden Gehäusehälften kann dabei einen Befestigungsvorsprung aufweisen und der elektrische Motor einen Stator mit einer zentralen Öffnung, insbesondere eine Statorwicklung mit einer zentralen Öffnung aufweisen, mittels welcher Öffnung der Stator zu seiner Befestigung bzw. die Statorwicklung zu ihrer Befestigung an der jeweiligen Gehäusehälfte, auf dem Befestigungsvorsprung festgelegt, insbesondere aufgepresst, aufgesteckt und/oder aufgerastet ist.

Mittels der zentralen Öffnung ist der Stator zu seiner Befestigung an einer der Gehäusehälften auf dem Befestigungsvorsprung festgelegt, d.h. der Stator ist auf den Befestigungsvorsprung aufgesetzt, so dass der Befestigungsvorsprung die zentrale Öffnung durchdringt.

In einer ersten Ausführungsvariante kann der Stator durch einen Passungssitz kraftschlüssig auf den Befestigungsvorsprung aufgepresst sein. Dazu kann der Innendurchmesser der zentralen Öffnung des Stators an den Außendurchmesser des Befestigungsvorsprungs angepasst sein.

In einer zweiten Ausführungsvariante kann der Stator zunächst auf den Befestigungsvorsprung aufgesetzt sein und mittels eines separaten, lösbar befestigten Stirndeckels formschlüssig befestigt sein. Der Stator kann insoweit zwischen dem Befestigungsvorsprung und dem Stirndeckel in axialer Richtung formschlüssig und in radialer Richtung zumindest kraftschlüssig, optional auch formschlüssig festgelegt sein.

In einer dritten Ausführungsvariante kann der Stator auf den Befestigungsvorsprung aufgesetzt und mittels wenigstens einer, insbesondere mehrerer, vorzugsweise gleichmäßig über den Umfang verteilter Rasthaken aufgerastet sein. Der wenigstens eine Rasthaken kann mit seinem Fußabschnitt insoweit mit dem Befestigungsvorsprung fest verbunden bzw. einteilig mit diesem ausgebildet sein und der elastische Kopfabschnitt des Rasthakens umgreift dann den Stator, insbesondere das Statorblechpaket von außen.

Die elektro-mechanische Öffnungs-Hilfsvorrichtung kann eine erste Gehäusehälfte und eine zweite Gehäusehälfte aufweisen, wobei ein starrer Achsstift zwischen den beiden Gehäusehälften gelagert ist und der Motor einen Rotor, insbesondere einen Permanentmagnetrotor aufweist, welcher eine Rotor-Hohlwelle umfasst, die auf dem Achsstift drehbar sitzend zwischen den beiden Gehäusehälften drehbar gelagert ist. Der Achsstift kann aus einem insbesondere oberflächengehärteten Stahl hergestellt sein.

Nach einer bevorzugten Ausführungsform des erfindungsgemäßen Haushaltskältegerätes weist die Hilfsvorrichtung ein Gehäuse auf, innerhalb dem im Wesentlichen alle Komponenten der Hilfsvorrichtung angeordnet sind. Vorzugsweise sind insbesondere innerhalb des Gehäuses alle zum Betrieb der Hilfsvorrichtung notwendigen elektrischen und gegebenenfalls mechanischen Komponenten angeordnet, gegebenenfalls bis auf eine elektrische Stromversorgung. Ein Stellkörper ist vorzugsweise auch im Gehäuse angeordnet, ragt dann aber zumindest in seiner ausgefahrenen Stellung zumindest teilweise aus dem Gehäuse heraus. Das Gehäuse der Hilfsvorrichtung ist vorzugsweise aus Kunststoff, insbesondere aus glasfaserverstärktem Polyamid (PA-GF) gefertigt.

Verschiedene Ausführungsbeispiele der Erfindung sind exemplarisch in den beigefügten schematischen Zeichnungen dargestellt.

Es zeigen:
- Fig. 1: ein Haushaltskältegerät mit einem Türblatt und einer elektro-mechanischen Öffnungs-Hilfsvorrichtung zum Öffnen des Türblatts in einer perspektivischen Darstellung,
- Fig. 2: eine Prinzipdarstellung der elektro-mechanischen Öffnungs-Hilfsvorrichtung,
- Fig. 3: eine Ausführungsform der elektro-mechanischen Öffnungs-Hilfsvorrichtung in einer Draufsicht,
- Fig. 4: eine Teilschnittdarstellung der elektro-mechanischen Öffnungs-Hilfsvorrichtung gemäß Fig. 3,
- Fig. 5: eine perspektivische Darstellung der elektro-mechanischen Öffnungs-Hilfsvorrichtung gemäß Fig. 3 bei entferntem Gehäuse,
- Fig. 6: eine erste Ausführungsvariante eines Motors in einer perspektivischen Schnittdarstellung,
- Fig. 7: eine zweite Ausführungsvariante eines Motors in einer perspektivischen Schnittdarstellung, und
- Fig. 8: eine dritte Ausführungsvariante eines Motors in einer perspektivischen Schnittdarstellung.

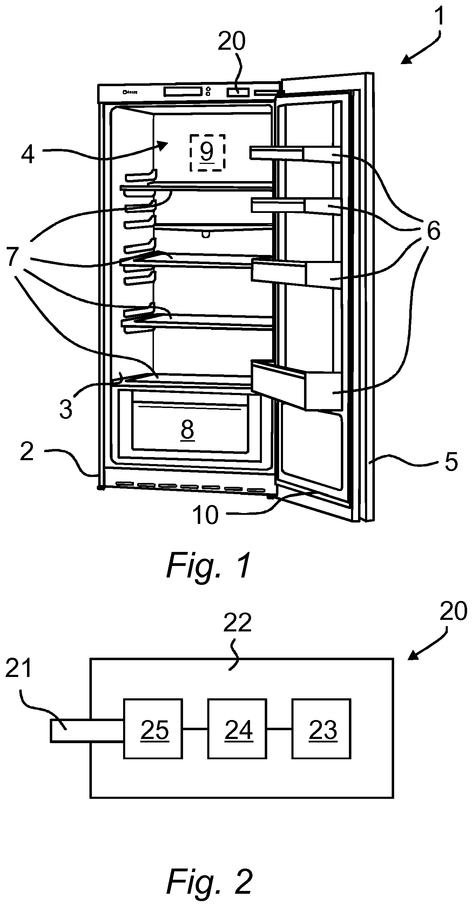

Die Fig. 1 zeigt in einer perspektivischen Darstellung ein Haushaltskältegerät 1, das einen wärmeisolierten Korpus 2 mit einem Innenbehälter 3 umfasst, der einen kühlbaren Innenraum 4 begrenzt. Der kühlbare Innenraum 4 ist zum Lagern von nicht näher dargestellten Lebensmitteln vorgesehen.

Das Haushaltskältegerät 1 weist im Falle des vorliegenden Ausführungsbeispiels ein schwenkbares Türblatt 5 zum Verschließen des kühlbaren Innenraums 4 auf. Das Türblatt 5 ist insbesondere bezüglich einer vertikal verlaufenden Achse schwenkbar gelagert. Bei geöffnetem Türblatt 5, wie in der Fig. 1 dargestellt, ist der kühlbare Innenraum 4 zugänglich.

An der in Richtung kühlbaren Innenraum 4 gerichteten Seite des Türblatts 5 sind im Falle des vorliegenden Ausführungsbeispiels mehrere Türabsteller 6 zum Lagern von Lebensmitteln angeordnet. Im kühlbaren Innenraum 4 sind insbesondere mehrere Fachböden 7 zum Lagern von Lebensmitteln angeordnet und insbesondere im unteren Bereich des kühlbaren Innenraums 4 ist eine Schublade 8 angeordnet, in der ebenfalls Lebensmittel gelagert werden können.

Das Haushaltskältegerät 1 umfasst eine insbesondere als Kältemittelkreislauf ausgeführte Kältevorrichtung zum Kühlen des kühlbaren Innenraums 4. Der Kältemittelkreislauf umfasst insbesondere einen Verdichter, einen dem Verdichter nachgeschalteten Verflüssiger, eine dem Verflüssiger nachgeschaltete Drosselvorrichtung, die insbesondere als ein Drossel- oder Kapillarrohr ausgeführt ist, und einen Verdampfer, der zwischen der Drosselvorrichtung und dem Verdichter angeordnet ist. Der Verdichter ist vorzugsweise innerhalb eines Maschineraums des Haushaltkältegerätes 1 angeordnet, der sich insbesondere hinter der Schublade 8 befindet.

Das Haushaltskältegerät 1 umfasst im Falle des vorliegenden Ausführungsbeispiels eine elektronische Steuervorrichtung 9, die eingerichtet ist, die Kältevorrichtung, insbesondere den Verdichter des Kältemittelkreislaufs in für den Fachmann in allgemein bekannter Weise derart anzusteuern, dass der kühlbare Innenraum 4 zumindest in etwa eine vorgegebene oder vorgebbare Soll-Temperatur aufweist. Die elektronische Steuervorrichtung 9 ist vorzugsweise derart eingerichtet, dass sie die Temperatur des kühlbaren Innenraums 4 regelt. Um gegebenenfalls die Ist-Temperatur des kühlbaren Innenraums 4 zu erhalten, kann das Haushaltskältegerät 1 wenigstens einen nicht näher dargestellten und mit der elektronischen Steuervorrichtung 9 verbundenen Temperatursensor aufweisen.

Das Haushaltskältegerät 1 weist ferner eine elektro-mechanische Öffnungs-Hilfsvorrichtung 20 auf, welche eingerichtet ist, ein Öffnen des geschlossenen Türblatts 5 zumindest zu unterstützen. Eine Prinzipdarstellung der elektro-mechanischen Öffnungs-Hilfsvorrichtung 20 ist in der Fig. 2 gezeigt.

Die elektro-mechanische Öffnungs-Hilfsvorrichtung 20 ist beispielsweise im oder am Korpus 2 befestigt und umfasst einen Stellkörper 21, z.B. einen Stößel, welcher automatisch mittels eines Aktuators 22 der elektro-mechanischen Öffnungs-Hilfsvorrichtung 20 von einer eingefahrenen in eine ausgefahrenen Stellung bewegt werden kann. In seiner eingefahrenen Stellung erlaubt der Stößel 21 ein Schließen des Türblatts 5 bzw. der Stößel 21 wird beim Schließen des Türblatts 5 in seine eingefahrene Stellung gedrückt. Der Aktuator 22 umfasst einen elektrischen Motor 23, ein Doppelverzahnungs-Stirnrad 24 und eine Zahnstange 25.

Im Falle des vorliegenden Ausführungsbeispiels umfasst das Haushaltskältegerät 1 eine an der in Richtung kühlbaren Innenraum 4 gerichteten Seite des Türblatts 5 befestigte Magnetdichtung 10, welche bei geschlossenem Türblatt 5 an der Stirnseite des Korpus 2 anliegt. Die Magnetdichtung 10 ist elastisch, sodass sich bei einem Drücken am geschlossenen Türblatt 5 dieses ein wenig in Richtung des kühlbaren Innenraums 4 bewegt, wodurch sich der Luftdruck innerhalb des kühlbaren Innenraums 4 ändert.

Aufgrund der elastischen Magnetdichtung 10 löst sich bei einem Ziehen am geschlossenen Türblatt 5 die Magnetdichtung 10 nicht sofort vom Korpus 2, wodurch sich ebenfalls der Luftdruck innerhalb des kühlbaren Innenraums 4 ändert.

Im Falle des vorliegenden Ausführungsbeispiels ist die elektro-mechanische Öffnungs-Hilfsvorrichtung 20 derart ausgeführt, dass sie den Wunsch einer Person, das Türblatt 5 zu öffnen, erkennt, sobald die Person am geschlossenen Türblatt 5 zieht oder drückt. Daraufhin bewegt der Aktuator 22 automatisch den Stößel von seiner eingefahrenen Stellung in seine ausgefahrene Stellung. Während dieser Bewegung drückt der Stößel das Türblatt 5 zumindest so weit auf, dass sich die Magnetdichtung 10 vom Korpus 2 löst, sodass die Person das Türblatt 5 leichter komplett öffnen kann.

Beispielsweise aufgrund einer Messung und Auswertung der Änderung des Luftdrucks innerhalb des kühlbaren Innenraums 4 kann somit auf ein Ziehen oder Drücken am Türblatt 5 und somit auf den Wunsch einer Person, das geschlossene Türblatt 5 öffnen zu wollen, geschlossen werden. Demgemäß kann eine dem Fachmann als solches bekannte Sensorvorrichtung und eine entsprechende Steuereinrichtung vorgesehen sein, um den elektro-mechanischen Aktuator 22 zu aktivieren, wenn der Wunsch einer Person, das geschlossene Türblatt 5 öffnen zu wollen, erkannt wird, so dass das geschlossene Türblatt 5 bzw. die geschlossene Schublade durch Verstellen des Stellkörpers 21 durch den elektro-mechanischen Aktuator 22 zumindest teilweise automatisch geöffnet wird.

Das Haushaltskältegerät 1 kann auch eine Schublade aufweisen, welche zumindest teilweise aus dem kühlbaren Innenraum 4 herausziehbar und in den kühlbaren Innenraum 4 hineinschiebbar ist. Im hineingeschobenen Zustand verschließt diese Schublade den kühlbaren Innenraum 4. Ist diese Schublade zumindest teilweise aus dem kühlbaren Innenraum 4 herausgezogen, dann ist sie geöffnet. Die elektro-mechanische Öffnungs-Hilfsvorrichtung 20 kann dann auch dafür vorgesehen sein, den Wunsch, die Schublade zu öffnen, zu erkennen und die Schublade entsprechend zumindest teilweise automatisch zu öffnen.

Im Falle des vorliegenden Ausführungsbeispiels ist die elektro-mechanische Öffnungs-Hilfsvorrichtung 20 derart ausgeführt, dass sie den Wunsch einer Person, diese Schublade zu öffnen, erkennt, sobald die Person an der geschlossenen Schublade zieht oder drückt. Daraufhin bewegt der Aktuator 22 automatisch den Stößel von seiner eingefahrenen Stellung in seine ausgefahrene Stellung. Während dieser Bewegung drückt der Stößel die Schublade zumindest soweit aus dem kühlbaren Innenraum 4, dass sich eine Magnetdichtung der Schublade vom Korpus 2 löst, sodass die Person die Schublade leichter komplett öffnen kann.

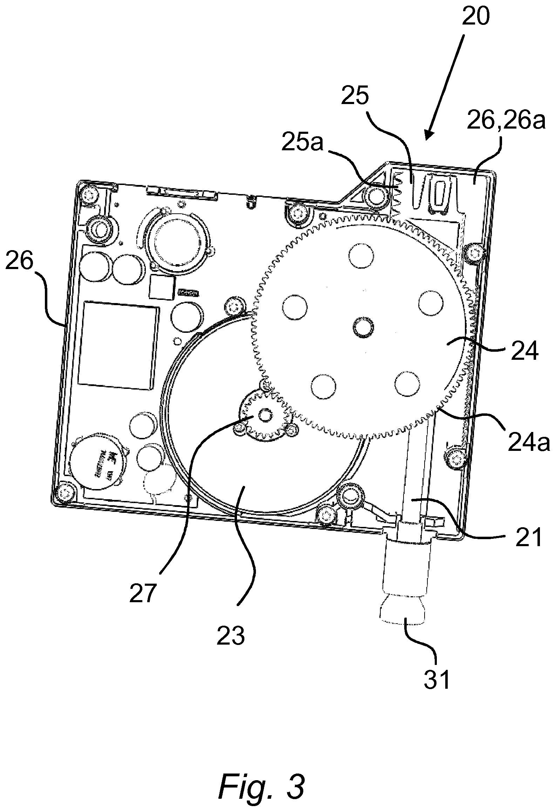

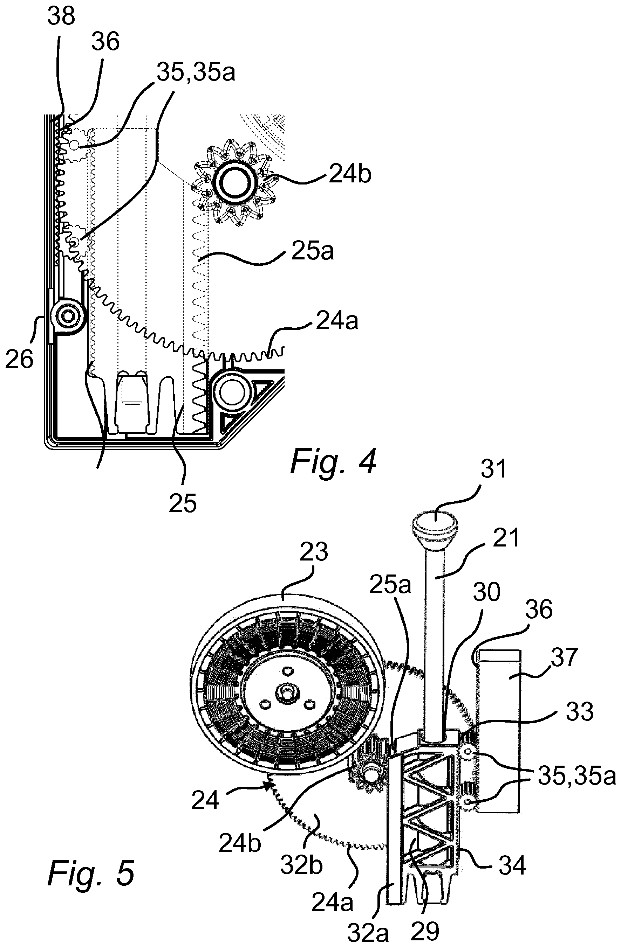

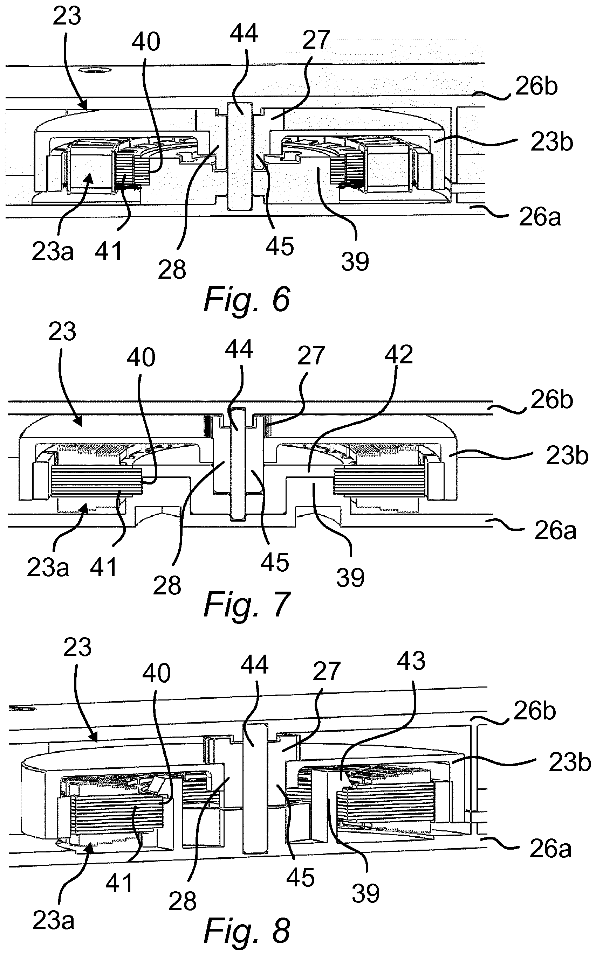

Der elektro-mechanische Aktuator 22 umfasst den elektrischen Motor 23, ein Antriebsritzel 27, das Doppelverzahnungs-Stirnrad 24, sowie die Zahnstange 25. Wie insbesondere in der Fig. 6 bis 8 dargestellt, ist das Antriebsritzel 27 mit einer Motorwelle 28 des Motors 23 verbunden. Das Antriebsritzel 27 kämmt, wie insbesondere in Fig. 3 dargestellt ist, mit einer Eingangsverzahnung 24a des Doppelverzahnungs-Stirnrades 24. Das Doppelverzahnungs-Stirnrad 24 weist außerdem eine Ausgangsverzahnung 24b auf, welche, wie insbesondere in Fig. 4 und Fig. 5 dargestellt ist, mit einem Zahnstangenprofil 25a der Zahnstange 25 in Eingriff ist. Die Zahnstange 25 ist mit dem Stellkörper 21 verbunden.

Im dargestellten Ausführungsbeispiel ist, wie insbesondere in Fig. 5 dargestellt, die Zahnstange 25 an einem Grundkörper 29 ausgebildet. Der Grundkörper 29 weist eine Aufnahme 30 auf, in welche der Stellkörper 21, insbesondere der Stößel eingesteckt und darin verrastet ist. Der Stellkörper 21, insbesondere der Stößel weist an seinem freien Stirnende eine Kappe 31 auf. Die Kappe 31 kann beispielsweise auf das Stirnende des Stellkörpers 21, insbesondere des Stößels aufgesteckt oder aufgeschraubt sein. Insbesondere im Falle eines Stellkörpers 21 oder Stößels aus einem metallischen Werkstoff, wie Stahl, kann die Kappe 31 aus Kunststoff hergestellt sein. Die Kappe 31 berührt zumindest während des automatischen Öffnungsvorgangs das zu öffnende Türblatt 5 oder die zu öffnende Schubladenfront an dessen jeweiliger Innenseite. Der Grundkörper 29 weist außerdem eine erste Wange 32a auf, welche die Ausgangsverzahnung 24b des Doppelverzahnungs-Stirnrades 24 axial abstützt.

An einer dem Zahnstangenprofil 25a gegenüberliegenden Zahnstangenwand 33 der Zahnstange 25, bzw. des Grundkörpers 29, weist der Grundkörper 29 eine Wälzfläche 34, insbesondere in Form eines Wellenprofils auf. An der Wälzfläche 34 wälzen im Falle des vorliegenden Ausführungsbeispiels zwei Wälzkörper 35 in Form von gezahnten Stützrollen 35a ab. Die gezahnten Stützrollen 35a weisen im Falle des vorliegenden Ausführungsbeispiels jeweils ein Wellenprofil auf. Die Fig. 4 und Fig. 5 zeigen, dass die Wälzkörper 35, insbesondere die Stützrollen 35a an einer der Wälzfläche 34 gegenüberliegenden Seite der Wälzkörper 35 bzw. der Stützrollen 35a durch eine feststehende zweite Wälzfläche 36 gegen das Gehäuse 26 abgestützt sind. Die zweite Wälzfläche 36 kann, wie in Fig. 5 dargestellt, an einem separaten Stützkörper 37 ausgebildet sein, der an dem Gehäuse 26 befestigt ist, oder einteilig, wie in Fig. 4 dargestellt, unmittelbar mit einer Innenwand 38 des Gehäuses 26 ausgebildet sein.

Die Fig. 5 zeigt insbesondere, dass das Doppelverzahnungs-Stirnrad 24 eine zweite Wange 32b bilden kann, an welcher nicht nur die Ausgangsverzahnung 24b bzw. das Zahnstangenprofil 25a eine axiale Führung erhält, sondern gleichzeitig auch der wenigstens eine Wälzkörper 35 bzw. die beiden Stützrollen 35a axial geführt sind.

Die elektro-mechanische Öffnungs-Hilfsvorrichtung 20 weist demgemäß das Gehäuse 26, insbesondere zwei Gehäusehälften 26a, 26b auf, wobei das Gehäuse 26, die Gehäusehälften 26a, 26b, das Antriebsritzel 27, das Doppelverzahnungs-Stirnrad 24, die Zahnstange 25 und/oder der wenigstens eine Wälzkörper 35 bzw. die beiden Stützrollen 35a aus glasfaserverstärktem Polyamid PA-GF hergestellt sind.

Zwischen den beiden Gehäusehälften 26a, 26b sind zumindest der elektrischen Motor 23, das Antriebsritzel 27, das Doppelverzahnungs-Stirnrad 24, die Zahnstange 25 und der Stellkörper 21 angeordnet bzw. gelagert oder befestigt.

Die Fig. 6 bis Fig. 8 zeigen drei Ausführungsvarianten, bei denen an einer der beiden Gehäusehälften 26a der elektro-mechanische Öffnungs-Hilfsvorrichtung 20 ein Befestigungsvorsprung 39 angeordnet ist. Der jeweilige elektrische Motor 23 weist einen Stator 23a mit einer zentralen Öffnung 40 auf. In den gezeigten Ausführungsvarianten wird die zentrale Öffnung 40 von einer inneren Kreismantelwand eines Statorblechpakets 41 gebildet. Mittels der zentralen Öffnung 40 ist der Stator 23a zu seiner Befestigung an der Gehäusehälfte 26a, auf dem Befestigungsvorsprung 39 festgelegt, d.h. der Stator 23a ist auf den Befestigungsvorsprung 39 aufgesetzt, so dass der Befestigungsvorsprung 39 die zentrale Öffnung 40 durchdringt.

Die Fig. 6 zeigt eine erste Ausführungsvariante, bei welcher der Stator 23a durch einen Passungssitz kraftschlüssig auf den Befestigungsvorsprung 39 aufgepresst ist. Dazu ist der Innendurchmesser der zentralen Öffnung 40 des Stators 23a an den Außendurchmesser des Befestigungsvorsprungs 39 angepasst.

Die Fig. 7 zeigt eine zweite Ausführungsvariante, bei welcher der Stator 23a zunächst auf den Befestigungsvorsprung 39 aufgesetzt ist und mittels eines separaten, lösbar befestigten Stirndeckels 42 formschlüssig befestigt ist. Der Stator 23a ist insoweit zwischen dem Befestigungsvorsprung 39 und dem Stirndeckel 42 in axialer Richtung formschlüssig und in radialer Richtung zumindest kraftschlüssig, optional auch formschlüssig festgelegt.

Die Fig. 8 zeigt eine dritte Ausführungsvariante, bei welcher der Stator 23a auf den Befestigungsvorsprung 39 aufgesetzt und mittels wenigstens einer, insbesondere mehrerer, vorzugsweise gleichmäßig über den Umfang verteilter Rasthaken 43 aufgerastet ist. Der wenigstens eine Rasthaken 43 ist mit seinem Fußabschnitt insoweit mit dem Befestigungsvorsprung 39 fest verbunden bzw. einteilig mit diesem ausgebildet und der elastische Kopfabschnitt des Rasthakens 43 umgreift den Stator 23a, insbesondere das Statorblechpaket 41 von außen.

In allen drei Ausführungsvarianten weist die elektro-mechanische Öffnungs-Hilfsvorrichtung 20 einen starren Achsstift 44 auf, der zwischen den beiden Gehäusehälften 26a, 26b gelagert ist. Der Rotor 23b weist eine Rotor-Hohlwelle 45 auf, die auf dem Achsstift 44 drehbar sitzend zwischen den beiden Gehäusehälften 23a, 23b drehbar gelagert ist.

### BEZUGSZEICHENLISTE

- 1: Haushaltskältegerät
- 2: Korpus
- 3: Innenbehälter
- 4: kühlbarer Innenraum
- 5: Türblatt
- 6: Türabsteller
- 7: Fachböden
- 8: Schublade
- 9: elektronische Steuervorrichtung
- 10: Magnetdichtung
- 20: elektro-mechanische Öffnungs-Hilfsvorrichtung
- 21: Stellkörper
- 22: elektro-mechanischer Aktuator
- 23: Motor
- 23a: Stator
- 23b: Rotor
- 24: Doppelverzahnungs-Stirnrad
- 24a: Eingangsverzahnung
- 24b: Ausgangsverzahnung
- 25: Zahnstange
- 25a: Zahnstangenprofil
- 26: Gehäuse
- 26a: erste Gehäusehälfte
- 26b: zweite Gehäusehälfte
- 27: Antriebsritzel
- 28: Motorwelle
- 29: Grundkörper
- 30: Aufnahme
- 31: Kappe
- 32a: erste Wange
- 32b: zweite Wange
- 33: Zahnstangenwand
- 34: erste Wälzfläche
- 35: Wälzkörper
- 35a: Stützrollen
- 36: zweite Wälzfläche
- 37: Stützkörper
- 38: Innenwand
- 39: Befestigungsvorsprung
- 40: zentrale Öffnung
- 41: Statorblechpaket
- 42: Stirndeckel
- 43: Rasthaken
- 44: Achsstift
- 45: Rotor-Hohlwelle

## Patentansprüche

1. Haushaltskältegerät, aufweisend einen wärmeisolierten Korpus (2), der einen Innenbehälter (3) mit einem zum Lagern von Lebensmitteln vorgesehenen kühlbaren Innenraum (4) aufweist, eine zum Kühlen des kühlbaren Innenraums (4) vorgesehene Kältevorrichtung und eine elektro-mechanische Öffnungs-Hilfsvorrichtung (20), sowie ein relativ zum wärmeisolierten Korpus (2) schwenkbar gelagertes, zum Öffnen und Schließen des kühlbaren Innenraums (4) vorgesehenes Türblatt (5) oder eine Schublade, welche im geschlossenen Zustand in den kühlbaren Innenraum (4) geschoben ist, um diesen zu schließen, und im geöffneten Zustand zumindest teilweise aus dem kühlbaren Innenraum (4) herausgezogen ist, wobei die elektro-mechanische Öffnungs-Hilfsvorrichtung (20) einen elektro-mechanischen Aktuator (22) aufweist, der ausgebildet ist, bei seiner Aktivierung das geschlossene Türblatt (5) bzw. die geschlossene Schublade durch Verstellen eines Stellkörpers (21) der elektro-mechanischen Öffnungs-Hilfsvorrichtung (20) zumindest teilweise automatisch zu öffnen, wobei der elektro-mechanische Aktuator (22) einen elektrischen Motor (23), ein Antriebsritzel (27), ein Doppelverzahnungs-Stirnrad (24) und eine Zahnstange (25) aufweist, und wobei das Antriebsritzel (27) mit einer Motorwelle (28) des Motors (23) verbunden ist und mit der Eingangsverzahnung (24a) des Doppelverzahnungs-Stirnrades (24) kämmt, die Ausgangsverzahnung (24b) des Doppelverzahnungs-Stirnrades (24) mit einem Zahnstangenprofil (25a) der Zahnstange (25) in Eingriff ist und die Zahnstange (25) mit dem Stellkörper (21) verbunden ist, **dadurch gekennzeichnet, dass** die Zahnstange (25) an einer dem Zahnstangenprofil (25a) gegenüberliegenden Zahnstangenwand (33) eine erste Wälzfläche (34) aufweist, an der wenigstens ein Wälzkörper (35) abwälzt, der sich außerdem an seiner der ersten Wälzfläche (34) gegenüberliegenden Seite gegen das Gehäuse (26) abstützt.

2. Haushaltskältegerät nach Anspruch 1, **dadurch gekennzeichnet, dass** das Antriebsritzel (27) in einem solchen Abstand zum Doppelverzahnungs-Stirnrad (24) angeordnet ist, dass der Kopfkreisdurchmesser des Antriebsritzels (27) den Teilkreisdurchmesser der Eingangsverzahnung (24a) des Doppelverzahnungs-Stirnrades (24) berührt oder der Teilkreisdurchmesser des Antriebsritzels (27) den Kopfkreisdurchmesser der Eingangsverzahnung (24a) des Doppelverzahnungs-Stirnrades (24) berührt.

3. Haushaltskältegerät nach Anspruch 1 oder 2, **dadurch gekennzeichnet, dass** der wenigstens eine Wälzkörper (35) eine glattwandige oder gezahnte Stützrolle (35a) ist.

4. Haushaltskältegerät nach einem der Ansprüche 1 bis 3, **dadurch gekennzeichnet, dass** das Doppelverzahnungs-Stirnrad (24) eine Wange (32b) bildet und/oder die Zahnstange (25) eine Wange (32a) aufweist, an welcher der wenigstens eine Wälzkörper (35) und/oder die Ausgangsverzahnung (24b) axial geführt ist.

5. Haushaltskältegerät nach einem der Ansprüche 1 bis 4, **dadurch gekennzeichnet, dass** die elektro-mechanische Öffnungs-Hilfsvorrichtung (20) ein Gehäuse (26), insbesondere zwei Gehäusehälften (26a, 26b) aufweist, und das Gehäuse (26), die Gehäusehälften (26a, 26b), das Antriebsritzel (27), das Doppelverzahnungs-Stirnrad (24), die Zahnstange (25), der wenigstens eine Wälzkörper (35) und/oder der Stellkörper (21) aus glasfaserverstärktem Polyamid (PA-GF) hergestellt sind.

6. Haushaltskältegerät nach einem der Ansprüche 1 bis 5, **dadurch gekennzeichnet, dass** die elektro-mechanische Öffnungs-Hilfsvorrichtung (20) ein Gehäuse (26), insbesondere zwei Gehäusehälften (26a, 26b) aufweist, worin zumindest der elektrischen Motor (23), das Antriebsritzel (27), das Doppelverzahnungs-Stirnrad (24), die Zahnstange (25), der wenigstens eine Wälzkörper (35) und der Stellkörper (21) angeordnet bzw. gelagert oder befestigt sind.

7. Haushaltskältegerät nach einem der Ansprüche 1 bis 6, **dadurch gekennzeichnet, dass** der elektrische Motor (23) ein permanenterregter Wechselstrom-Synchronmotor ist, der insbesondere mit einer Drehzahl zwischen 500 und 1.000 Umdrehungen pro Minute, insbesondere mit einer Drehzahl zwischen 700 und 800 Umdrehungen pro Minute betrieben wird.

8. Haushaltskältegerät nach einem der Ansprüche 1 bis 7, **dadurch gekennzeichnet, dass** die elektro-mechanische Öffnungs-Hilfsvorrichtung (20) eine erste Gehäusehälfte (26a) und eine zweite Gehäusehälfte (26b) aufweist, wenigstens eine der beiden Gehäusehälften (26a, 25b) einen Befestigungsvorsprung (39) aufweist und der elektrische Motor (23) einen Stator (23a) mit einer zentralen Öffnung (40), insbesondere eine Statorwicklung mit einer zentralen Öffnung (40) aufweist, mittels welcher Öffnung der Stator (23a) zu seiner Befestigung bzw. die Statorwicklung zu ihrer Befestigung an der jeweiligen Gehäusehälfte (26a, 26b), auf dem Befestigungsvorsprung (39) festgelegt, insbesondere aufgepresst, aufgesteckt und/oder aufgerastet ist.

9. Haushaltskältegerät nach einem der Ansprüche 1 bis 8, **dadurch gekennzeichnet, dass** die elektro-mechanische Öffnungs-Hilfsvorrichtung (20) eine erste Gehäusehälfte (26a) und eine zweite Gehäusehälfte (26b) aufweist, ein starrer Achsstift (44) zwischen den beiden Gehäusehälften (26a, 26b) gelagert ist und der Motor (23) einen Rotor (23b), insbesondere einen Permanentmagnetrotor aufweist, welcher eine Rotor-Hohlwelle (45) umfasst, die auf dem Achsstift (44) drehbar sitzend zwischen den beiden Gehäusehälften (26a, 26b) drehbar gelagert ist.

## Claims

1. Household refrigeration appliance, having a heat-insulated carcass (2) which has an inner container (3) with a coolable interior (4) for the storage of foodstuffs, a refrigeration device which is provided for the purpose of cooling the coolable interior (4), and an electromechanical opening assistance device (20), and having a door leaf (5) which is hinged relative to the heat-insulated carcass (2) and is provided for the purpose of opening and closing the coolable interior (4), or a drawer which is pushed into the coolable interior (4) in the closed state, in order to close said interior, and is withdrawn at least partially from the coolable interior (4) in the open state, wherein the electromechanical opening assistance device (20) has an electromechanical actuator (22) which is designed when activated to automatically open the closed door leaf (5) or the closed drawer at least partially by means of repositioning an operating element (21) of the electromechanical opening assistance device (20), wherein the electromechanical actuator (22) has an electric motor (23), a drive pinion (27), a cylindrical gear with dual gearing (24), and a toothed rack (25), and wherein the drive pinion (27) is connected to a motor shaft (28) of the motor (23) and meshes with the input gearing (24a) of the cylindrical gear with dual gearing (24), the output gearing (24b) of the cylindrical gear with dual gearing (24) engages with a toothed rack profile (25a) of the toothed rack (25), and the toothed rack (25) is connected to the operating element (21), **characterised in that** the toothed rack (25) has a first rolling surface (34) on a toothed rack wall (33) which is on the opposite side to the toothed rack profile (25a), wherein at least one rolling element (35) rolls on said first rolling surface (34) and is further supported, on its side opposite the first rolling surface (34), against the housing (26).

2. Household refrigeration appliance according to claim 1, **characterised in that** the drive pinion (27) is arranged at such a distance from the cylindrical gear with dual gearing (24) that the outside diameter of the drive pinion (27) comes into contact with the pitch diameter of the input gearing (24a) of the cylindrical gear with dual gearing (24), or the pitch diameter of the drive pinion (27) comes into contact with the outside diameter of the input gearing (24a) of the cylindrical gear with dual gearing (24).

3. Household refrigeration appliance according to claim 1 or 2, **characterised in that** the at least one rolling element (35) is a smooth-wall or toothed supporting roller (35a).

4. Household refrigeration appliance according to one of claims 1 to 3, **characterised in that** the cylindrical gear with dual gearing (24) forms a cheek (32b) and/or the toothed rack (25) has a cheek (32a) on which the at least one rolling element (35) and/or the output gearing (24b) is axially guided.

5. Household refrigeration appliance according to one of claims 1 to 4, **characterised in that** the electromechanical opening assistance device (20) has a housing (26), in particular two housing halves (26a, 26b), and the housing (26), the housing halves (26a, 26b), the drive pinion (27), the cylindrical gear with dual gearing (24), the toothed rack (25), the at least one rolling element (35) and/or the operating element (21) are made of glass-fibre reinforced polyamide (PA-GF).

6. Household refrigeration appliance according to one of claims 1 to 5, **characterised in that** the electromechanical opening assistance device (20) has a housing (26), in particular two housing halves (26a, 26b), in which at least the electric motor (23), the drive pinion (27), the cylindrical gear with dual gearing (24), the toothed rack (25), the at least one rolling element (35) and the operating element (21) are arranged, mounted or fastened.

7. Household refrigeration appliance according to one of claims 1 to 6, **characterised in that** the electric motor (23) is a permanent-field alternating-current synchronous motor which is operated in particular at a rotational speed between 500 and 1,000 revolutions per minute, in particular at a rotational speed between 700 and 800 revolutions per minute.

8. Household refrigeration appliance according to one of claims 1 to 7, **characterised in that** the electromechanical opening assistance device (20) has a first housing half (26a) and a second housing half (26b), at least one of the two housing halves (26a, 25b) has a fastening projection (39), and the electric motor (23) has a stator (23a) with a central opening (40), in particular a stator winding with a central opening (40), by means of which opening the stator (23a) or the stator winding, for the purpose of fastening to the respective housing half (26a, 26b), is fixed onto, in particular pressed, pushed and/or locked onto the fastening projection (39).

9. Household refrigeration appliance according to one of claims 1 to 8, **characterised in that** the electromechanical opening assistance device (20) has a first housing half (26a) and a second housing half (26b), a rigid axle pin (44) is mounted between the two housing halves (26a, 26b), and the motor (23) has a rotor (23b), in particular a permanent-magnet rotor, which comprises a hollow rotor shaft (45) that is rotatably mounted on the axle pin (44) and is seated rotatably between the two housing halves (26a, 26b).

## Revendications

1. Appareil frigorifique ménager, présentant un corps calorifuge (2), lequel présente un contenant interne (3) avec un espace intérieur (4) réfrigérable prévu pour le stockage de denrées alimentaires, un dispositif de réfrigération prévu afin de réfrigérer l'espace intérieur (4) réfrigérable et un dispositif auxiliaire d'ouverture électromécanique (20), ainsi qu'un ouvrant (5) servant à ouvrir et à fermer l'espace intérieur (4) réfrigérable et logé en rotation par rapport au corps calorifuge (2) ou un tiroir, qui à l'état fermé est inséré dans l'espace intérieur (4) réfrigérable, afin de le fermer, et à l'état ouvert est au moins partiellement sorti de l'espace intérieur (4) réfrigérable, le dispositif auxiliaire d'ouverture électromécanique (20) présentant un actionneur électromécanique (22) exécuté afin d'ouvrir automatiquement au moins partiellement, par son activation, l'ouvrant fermé (5) resp. le tiroir fermé, en déplaçant un corps de réglage (21) du dispositif auxiliaire d'ouverture électromécanique (20), dans lequel l'actionneur électromécanique (22) présente un moteur électrique (23), un pignon d'entraînement (27), un engrenage double (24) et une crémaillère (25), et dans lequel le pignon d'entraînement (27) est relié à un arbre moteur (28) du moteur (23) et s'engrène avec l'engrenage d'entrée (24a) de l'engrenage double (24), l'engrenage de sortie (24b) de l'engrenage double (24) étant engrené avec un profilé à crémaillère (25a) de la crémaillère (25) et la crémaillère (25) étant reliée au corps de réglage (21), **caractérisé en ce que** la crémaillère (25) présente, en une paroi de crémaillère (33) opposée au profilé à crémaillère (25a) une première surface primitive de fonctionnement (34), sur laquelle au moins un corps de roulement (35) roule, lequel s'appuie en outre sur son côté opposé à la première surface primitive de fonctionnement (34) contre la carcasse (26).

2. Appareil frigorifique ménager selon la revendication 1, **caractérisé en ce que** le pignon d'entraînement (27) est disposé selon un tel écartement par rapport à l'engrenage double (24) que le diamètre de cercle extérieur du pignon d'entraînement (27) touche le diamètre primitif de l'engrenage d'entrée (24a) de l'engrenage double (24) ou le diamètre primitif du pignon d'entraînement (27) touche le diamètre de cercle extérieur de l'engrenage d'entrée (24a) de l'engrenage double (24).

3. Appareil frigorifique ménager selon la revendication 1 ou 2, **caractérisé en ce que** l'au moins un corps de roulement (35) est un galet tendeur à paroi lisse ou dentelé (35a).

4. Appareil frigorifique ménager selon l'une des revendications 1 à 3, **caractérisé en ce que** l'engrenage double (24) constitue un longeron (32b) et/ou la crémaillère (25) présente un longeron (32a) sur lequel l'au moins un corps de roulement (35) et/ou l'engrenage de sortie (24b) est mené axialement.

5. Appareil frigorifique ménager selon l'une des revendications 1 à 4, **caractérisé en ce que** le dispositif auxiliaire d'ouverture électromécanique (20) présente une carcasse (26), en particulier deux moitiés de carcasse (26a, 26b), et la carcasse (26), les moitiés de carcasse (26a, 26b), le pignon d'entraînement (27), l'engrenage double (24), la crémaillère (25), l'au moins un corps de roulement (35) et/ou le corps de réglage (21) sont fabriqués en polyamide renforcé à la fibre de verre (PA-GF).

6. Appareil frigorifique ménager selon l'une des revendications 1 à 5, **caractérisé en ce que** le dispositif auxiliaire d'ouverture électromécanique (20) présente une carcasse (26), en particulier deux moitiés de carcasse (26a, 26b), dans lesquelles au moins le moteur électrique (23), le pignon d'entraînement (27), l'engrenage double (24), la crémaillère (25), l'au moins un corps de roulement (35) et le corps de réglage (21) sont disposés resp. logés ou fixés.

7. Appareil frigorifique ménager selon l'une des revendications 1 à 6, **caractérisé en ce que** le moteur électrique (23) est un moteur synchrone à courant alternatif et excitation permanente, exploité en particulier selon une vitesse de rotation entre 500 et 1000 tours par minute, en particulier selon une vitesse de rotation entre 700 et 800 tours par minute.

8. Appareil frigorifique ménager selon l'une des revendications 1 à 7, **caractérisé en ce que** le dispositif auxiliaire d'ouverture électromécanique (20) présente une première moitié de carcasse (26a) et une deuxième moitié de carcasse (26b), au moins une des deux moitiés de carcasse (26a, 25b) présente une saillie de fixation (39) et le moteur électrique (23) un stator (23a) avec un orifice central (40), en particulier un bobinage statorique avec un orifice central (40), au moyen duquel orifice le stator (23a) resp. le bobinage statorique est fixé à la moitié de carcasse respective (26a, 26b) en étant solidarisé, en particulier pressé, placé et/ou encliqueté sur la saillie de fixation (39).

9. Appareil frigorifique ménager selon l'une des revendications 1 à 8, **caractérisé en ce que** le dispositif auxiliaire d'ouverture électromécanique (20) présente une première moitié de carcasse (26a) et une deuxième moitié de carcasse (26b), un pivot d'axe rigide (44) étant logé entre les deux moitiés de carcasse (26a, 26b) et le moteur (23) présentant un rotor (23b), en particulier un rotor à aimant permanent, lequel englobe un arbre de rotor creux (45), logé en rotation sur le pivot d'axe (44) entre les deux moitiés de carcasse (26a, 26b).
